**Europäisches Patentamt**

**European Patent Office**

**Office européen des brevets**

(19)

(11) Publication number: **0 045 757**
**B1**

(12)

# EUROPEAN PATENT SPECIFICATION

(45) Date of publication of patent specification: **15.10.86**

(21) Application number: **81900427.6**

(22) Date of filing: **19.02.81**

(86) International application number:
**PCT/AU81/00020**

(87) International publication number:
**WO 81/02459 03.09.81 Gazette 81/21**

(51) Int. Cl.⁴: **F 16 L 13/14, F 16 L 47/00,
F 16 L 47/06, F 16 L 9/12,
B 21 D 39/04**

(54) **METHOD FOR JOINING PLASTICS PIPES.**

(30) Priority: **19.02.80 AU 2433/80**

(43) Date of publication of application:
**17.02.82 Bulletin 82/07**

(45) Publication of the grant of the patent:
**15.10.86 Bulletin 86/42**

(84) Designated Contracting States:
**AT CH DE FR GB LI LU NL SE**

(56) References cited:
**DE-A-1 625 963**
**DE-A-2 729 677**
**FR-A-2 061 360**
**GB-A- 343 967**
**GB-A- 775 838**
**GB-A-1 277 461**
**GB-A-1 389 079**
**US-A-3 217 400**
**US-A-3 466 738**
**US-A-3 976 314**

(73) Proprietor: **ESDAN PTY. LTD.**
**9 Subway Road**
**Rockdale, N.S.W. 2216 (AU)**

(72) Inventor: **SOUMAR, Karel**
**6/5 Benalla Avenue**
**Ashfield, N.S.W. 2131 (AU)**
Inventor: **ERLING, Earl**
**21 Oatley Park Avenue**
**Oatley, N.S.W. 2223 (AU)**

(74) Representative: **MacGregor, Gordon et al**
**ERIC POTTER & CLARKSON 14 Oxford Street**
**Nottingham, NG1 5BP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method and apparatus for joining two pipes made of plastics material and in particular to a method which enables joining of such pipes to form a gas tight seal.

The invention may be used with particular advantage for joining pipes of the type used for gas mains in a gas distribution network and is herein described with particular reference to that use. However it will be understood that the invention is not limited to use in joining gas mains pipes.

The abbreviations OD and ID are herein used to refer respectively to the outside diameter and inside diameter of a pipe.

Pipes for use as gas mains are now commonly made by extrusion of a plastics material such as nylon, polyethylene, polypropylene or polyvinyl chloride. A typical pipe for such use made of nylon has an OD of 70 mm and a wall thickness of 2—3 mm. However the method is also applicable to pipes of other plastics and/or dimensions.

Pipes of the kind under discussion are distinguished from hose and tubing made from rubber or plastics in that pipes are rigid and inflexible in comparison, pipes being supplied in straight lengths while hose and tubing are supplied in coils. Pipes of the kind under discussion are usually more flexible than metal pipes of corresponding dimensions.

Metal pipes have been joined by forcing one pipe end into a flared end of the other (U.S. Patent 3,466,738) relying on the ability of one metal pipe to retain a flare without elastic recovery and on the greater arch strength than rim strength of thin walled metal pipe. Such methods have not been considered to be applicable for joining plastics gas pipes.

Even for forming a dimensionally stable pipe socket for joining plastics water pipes, it has been considered necessary to insert a mould means while the pipe end was heated (U.K. Patent 1,389,079) and desirably to reinforce the mould means, to provide radially extending ribs on the inner pipe for tensile strength of the joint with the mould means and, to provide seal means to prevent leakage when another pipe was inserted in the socket so formed.

Accordingly, much attention has been directed to improving methods for connecting plastic pipes and particularly to methods enabling connection of gas mains pipes after a major portion of one of them has been buried in the ground, as occurs for example during the installation of a new mains pipeline or replacement of a section of an existing pipeline.

One method of making such connections involves use of threaded couplings which clamp to each pipe end to be joined or engage flanges formed at or near each pipe end. Such couplings usually provide an O-ring seal and in addition, may be solvent or thermally welded to the pipes after connection is made to ensure a gas tight.

joint. The couplings are inherently costly to manufacture. Those requiring the pipe to be flanged also add cost to the manufacture of the pipes which otherwise may be made by extrusion alone. Flanges, if required, prevent pipes from being cut to length in situ.

Furthermore, when pipes are being installed inside pre-existing pipes, as it sometimes practiced in programmes for replacing in-ground gas distribution networks, threaded couplings and/or pipe flanges tend to limit the outside diameter of the inner pipe to an extent which is undesirable.

U.S. Patent No. 3,217,400 shows a method of joining plastic pipes in which one pipe is provided with preformed belled end which is preformed by heating the pipe and hardening in a factory. The pipes are made in preferred range of lengths and are therefore not suitable for repairs in existing installations where the pipe must be cut to length. In the present invention the pipe may be made to any lengths — possibly many tens of metres to give a continuous length of, for example, gas pipe and the joint may be made in field conditions giving a single gas tight joint over a long length of pipe.

To obviate the need for couplings which increase the cost and the outer diameter of the pipeline as a whole, various methods relying on thermal or solvent welding have been employed.

For example an end portion of the bore of one pipe has been caused to melt and a corresponding portion of the outer surface of a connector of slightly greater OD than the ID of the pipe has been melted and the outer surface of the connector has been inserted into the heat softened bore of the pipe while the respective surfaces are still molten resulting, on cooling, in a fused joint. The other end of the connector is then similarly joined to another pipe.

In another but similar method one pipe is provided with a wire coil moulded into the internal circumference of the bore end portion. This pipe is then sleeved over the bore of a second pipe, or of a connector, of smaller outer diameter than the bore. An electric current is then passed through the coil from terminals moulded into the outer surface of the first pipe to cause fusion of the inner surface in the vicinity of the coil to form a welded joint.

In both cases portable power sources and complex control apparatus is required to bring about fusion of the respective pipe ends being joined while controlling fusion so that, on the one hand, adequate welding is obtained, while, on the other hand, pipe wall thickness is not adversely reduced with consequent lack of joint strength.

It has also been found that methods of joining pipes involving thermal fusion do not provide adequate joints when the pipes are made of a plastics material which adsorb moisture on its surface, for example nylon.

In solvent or chemical welding methods a connector, also of plastics material, has been used. In this case the bore of a first pipe to be joined is sleeved over a spigot at one end of the connector, a spigot at the other end of the connector being inserted in the bore of a second pipe.

To enable insertion of the connector spigot the OD of the spigot is made less than the unstrained ID of the pipe to which connection is desired. To achieve a gas tight seal an adhesive or solvent is coated on the connector spigot prior to insertion which on curing (or in the case of a solvent, drying) welds the connector to the pipe. Ths method suffers from the disadvantages that it is difficult to manufacture the connector spigots and pipe bores to the tolerances required for a sleeving fit. Often very poor adhesion is obtained between the connector and the pipes since fine tolerances, when obtained, tend to exude the adhesive or solvent from the bonding surfaces during joining of the parts resulting in poor mechanical bonding or gas leaks.

Accordingly an object of the present invention is a method for joining pipes of plastics material which overcomes the disadvantages of the methods described above, and which for preference may be used in the field.

Preferred embodiments of the method achieve that objective and enable two pipes extruded from plastics material to be joined, without the need for pipe flanges or threaded couplings and without resulting in a joint of substantially greater diameter than the pipes being joined.

Such embodiments do not necessitate the use of fusion and therefore can be applied with simple equipment in the field and without need for a portable power supply or careful heat control. The method results reliably in a gas tight join of sufficient mechanical strength for joining gas main pipes and joints can be made at low cost.

According to a first aspect the invention consists in a method of joining a pipe and a tubular element both of plastics material, where the outer diameter of the tubular element is greater than the inner diameter of the pipe, when the wall of each is unstrained, the method including flaring an end of the pipe and driving an end portion of the tubular element into and beyond the flared end so that the element is circumferentially gripped and clamped by the pipe, characterised in that the end of the pipe is flared at ambient temperature so that the wall is elastically deformed for a short period immediately prior to driving with considerable force the tubular element into the flared end, the material of the pipe being chosen so that the flared end elastically recovers to grip the tubular element after the driving operation and so that the bore of the pipe end is elastically expanded to an inner diameter greater than the outer diameter of the unstrained tubular element, and the material of the tubular element being chosen so that when the element is elastically gripped by the pipe, the tensile strain in the wall of the pipe is substantially equal to the compressive strain in the wall of the element.

The tubular element may be another pipe of extended length or may be a connector or coupling.

It will be understood that in the past, flexible and thin walled hose and tubing has been connected by means of metal connectors which are relatively rigid and non-compressible in comparison with the pipes under discussion. An end of such hose or tube may be pushed by hand over a spigot of the connector but no method similar to that herein described has been contemplated for pipes of the type herein discussed. Moreover in the case of hoses or tubes connected to a connector spigot, a clamp is usually required around the outer diameter of the assembly or a ribbing is required on the outer diameter of the connector spigot, or both of these expedients are required, to obtain a mechanical joint providing a gas tight seal. Moreover that method has only been used with small diameter flexible hoses or tubes in which the bore can be pushed onto the connector by hand, little pressure being required for extending the diameter of the pipe by virtue of the relatively small end wall cross-sectional area on which a pushing force can act.

In contrast the present method is applied to pipes having an end wall cross-sectional diameter such that insufficient force could be applied by hand to push one into the other.

By way of example only various embodiments of the invention will now be described with reference to the accompanying drawings wherein.

Figures 1 and 2 are respectively a front and a top view of an apparatus for carrying out the method of the invention.

Figures 3 to 5 show the different steps of an example of the method of the invention.

Figure 6 is a part-sectional view of a jaw of the apparatus disclosed in Figures 1 and 2.

Figure 7 shows a connector to be joined to one or two pipes with the method of the invention.

Figure 8 is a sectional view of a connector according to Figure 7 inserted into one pipe.

Figure 9 is a sectional view of a connector according to Figure 7 inserted into two pipes.

In a first embodiment of apparatus according to the invention there is provided a horizontal frame comprising two spaced apart ends 1, 2 connected longitudinally by a pair of parallel guide rods 3 having threaded end portions and held in assembly by nuts 4.

At one end 1 of the frame there is fixedly mounted first pipe clamping means 5 whereby a length of plastics pipe 6 may be gripped without damage so that an adjacent free end 7 of the pipe projects a distance beyond the clamping means towards the other frame end 2 and is held cantilevered with the pipe axis parallel to guide rods 3.

Intermediate the first pipe clamping means 5 and the opposite frame end 2 a second pipe clamping means 8 is mounted slidably to the guide rails for motion longitudinally of the guide rail pair. Second pipe clamping means 8 is arranged to grip a second pipe 9 (shown by broken lines) with a free end 10 projecting a distance therefrom towards the free end 7 of pipe 6 gripped by the first clamping means 5 and with the adjacent free end portions 7, 10 of each pipe in axial alignment.

Ram means 11, in the present example comprising a hand pump operable hydraulic cylinder 12 mounted to the frame end 2 and having ram 11 thereof passing through an orifice of frame end 2, are engageable to drive the second clamping means 8 towards clamping means 5.

In one embodiment of the apparatus, each clamping means 5, 8 comprises clamping jaws for engaging a pipe, a cradle to support the clamping jaws, and a lever system 13 for clamping the clamping jaws together and rigidly to the cradle.

With reference to Fig. 6, for preference the clamping jaws of the apparatus consist of an aluminium block having a cylindrical bore, the block having been split on a plane corresponding to the horizontal diameter of its bore and having the upper part 20 hinge mounted at 25 to the lower 26. The block bore 21 is incised with a plurality of circumferential grooves 22 each of which carries a ring of a rubbery material 23 projecting a short distance inwardly from the bore surface. The rubbery material of each ring is for preference a length of trapezoidal cross-section fan belting, the incised grooves having a corresponding trapezoidal cross-section and a greater width at their outer diameter than at the bore surface. The belting, in lengths of half a bore circumference, can be inserted in the grooves while the jaw halves are separated forming rings when the jaw halves are mated.

Clamping means 5, 8 for preference include a cradle mounted to the horizontal frame and adapted to support the lower jaw half with its bore side uppermost. End stops are provided on the cradle to prevent longitudinal motion of the jaw halves in a direction away from the other frame end during the thrusting step.

A lever system 13 is operable to clamp the upper jaw half to the lower jaw half.

The clamping means for preference enable one set of clamping jaws to be quickly replaced by another and permit jaws to be employed the internal bore of which is suited to the OD of a pipe to be clamped. By virtue of the inwardly protruding spaced apart rings circumscribing the bore, a pipe when clamped is slightly deformed into a corrugated surface configuration which grips the pipe lightly against axial movement relative to the jaws without damage to the pipe. For preference the bore of the jaws is from 10 to 15 cm long, more preferably from 14 to 16 cm and carries at least 5 and more preferably at least 10 belting rings.

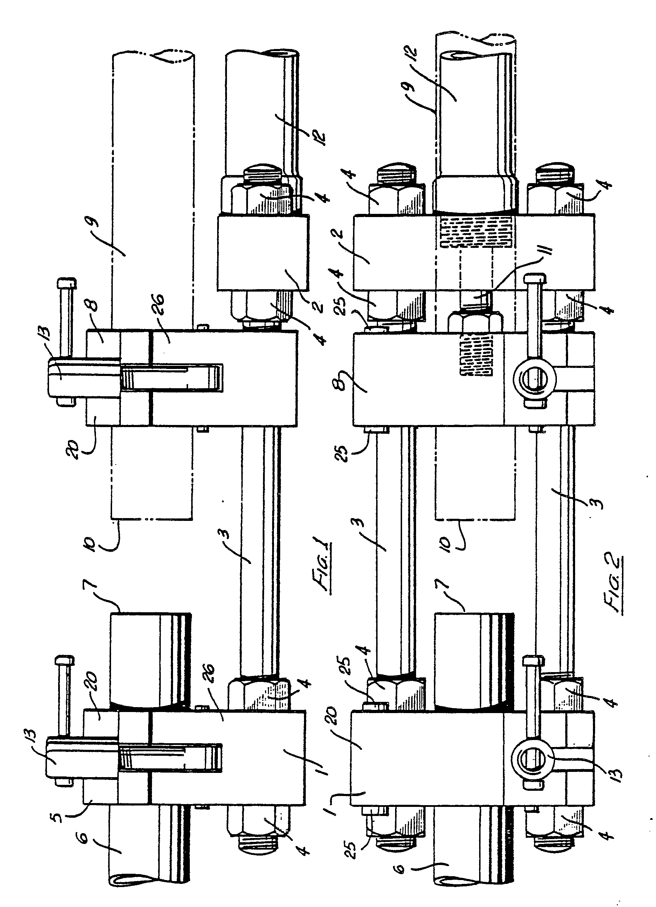

With reference to Fig. 1, as an example of a method according to the invention a first length of pipe 6 is clamped in the first clamping means 5 so that for example 10 or 15 cm of pipe 7 is projecting towards the second clamping means 8 and a second length of pipe 9 is clamped by the second clmaping means 8 with a similar distance 10 projecting towards the first, the two adjacent free pipe ends 7, 10 being separated by, for example, 10 cm.

By way of example the pipes may each be made by extrusion from nylon and have a nominal OD of 75 mm and a nominal ID of 70.5 mm. When clamped as described above the pipe ends projecting towards each other are in a co-axial alignment.

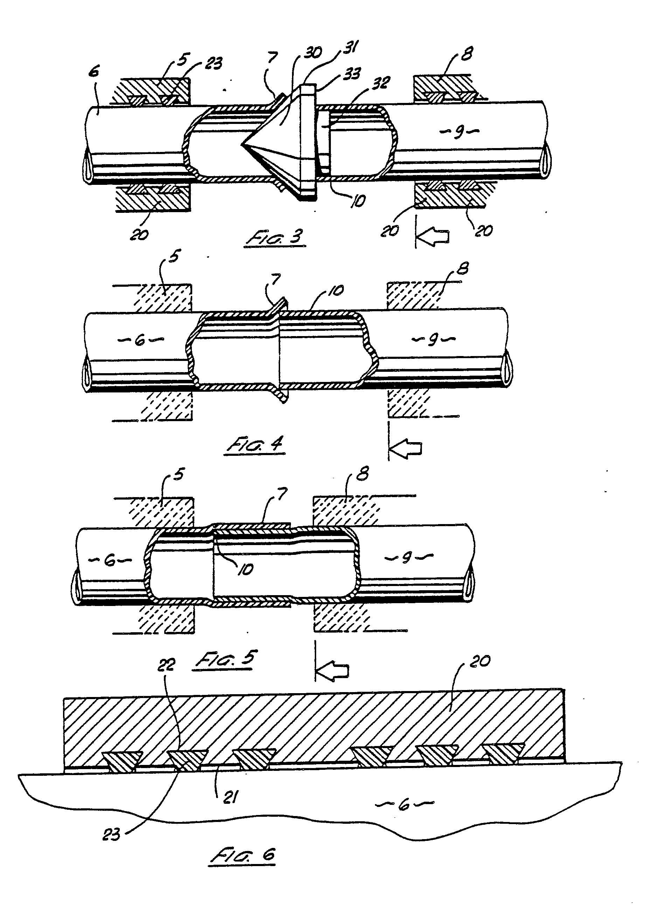

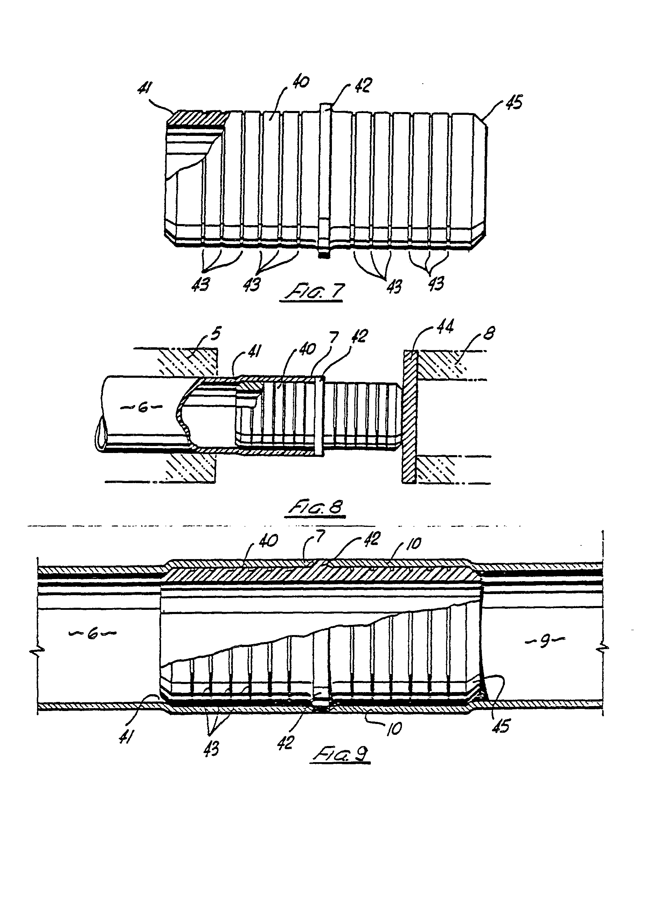

With reference to Fig. 3 a solid conical die 30 of diameter greater than the first pipe 6, is inserted point first in the bore of the first pipe 6 and ram 11 driven so that the second pipe end 10 buts against a flat portion 33 at the opposite end of the die exerting a force of, for example, 500 lbs. (2227 N) on die 30. The circumference of the bore opening of the first pipe is thereby strained and the mouth of the bore slightly flared as shown in Fig. 3. The force is maintained for a period, desirably 30—60 seconds.

For preference die 30 is provided with a spigot 32 extending axially from flat 33 and of smaller diameter than the bore of pipe end 10. Spigot 32 assists in maintaining axial alignment of the die and pipe bores during the flaring step and enables the die in effect to be mounted to pipe end 10 prior to driving that end towards pipe end 7 thus facilitating conduct of the flaring step.

The pressure is then released, die 30 removed, and ram 11 again driven so that the second pipe is brought to the mouth of the first pipe before it has fully recovered its unstrained end circumference as shown in Fig. 4. This time force continues to be applied and the outer diameter of the second pipe end 10 is driven into the first pipe by a distance as shown in Fig. 5. The distance may vary for example from one to ten centimetres, or more if desired. During the step the wall of the outer pipe 7 is elastically stretched, and it is believed that the wall 10 of the inner pipe is elastically compressed, in the circumferential direction. The force required for the flaring and for driving steps depends on the materials from which the pipe is made and on the radial dimensions of the pipe. Forces in the range of 1000 to 4000 lbs. (4454 N to 17815 N) are commonly required. When pressure is released and the apparatus removed from the pipes, the pipes are found to be gripping one another so as to resist pulling apart. The force required for pulling the joint apart is in some cases greater than the tensile strength of either pipe. The joint is gas tight but if desired one or both pipe ends may be coated with a glue or solvent prior to the driving step or the pipes may subsequently be thermally or chemically welded at the exposed pipe end or by heating the overlapping margin, for example by induction heating.

For preference the annular pipe edge which will be on the outer side of the joint is chamfered rearwardly from the mouth towards its inner circumference, and/or the pipe edge which will be on the inner side of the joint is chamfered rearwardly from the end towards its outer circumference.

According to another embodiment of the method of the invention a first pipe to be joined is clamped in the first clamping means 8 as in the first embodiment. A plastics tubular element or connector shown in Fig. 7 comprising a tube having an OD greater than the ID of the first pipe and for preference having an OD of a similar magnitude to the OD of the first pipe is clamped in the second clamping means. For preference the connector has its leading edge 41 chamfered rearwardly from the tip to its outer circumference 40. Desirably also, the connector has a circumferential stop flange 42 projecting outwardly from its outer surface intermediate the ends by a distance, for example equal to the wall thickness of the first pipe, to act as a stop. The connector is then driven into the first pipe as previously described suitable abutment means 44 being mounted to clamping means 8 (Fig. 8). If the connector has a stop flange, pressing is continued until a face of the flange abuts the pipe end as shown in Fig. 8. The flaring step is performed on the pipe by means of a die prior to driving in the connector.

If solvent or adhesive bonding is to be used, the connector as shown in Fig. 7 is desirably provided with a spiral groove on its outer surface or more preferably with a plurality of spaced apart circumferential grooves 43 in which solvent is trapped during the driving step. Some solvents and adhesives have been found to act as lubricants during this step in addition to forming a strong bond on drying or curing.

After the connector has been joined to one pipe in the above manner the other end 45 of the connector of Fig. 7 which is similarly chamfered may be joined to another pipe end 10 held in clamp 8 by similar means. Fig. 10 shows the completed connection.

If desired the connector may incorporate pipe fittings and the like — for example a T connection whereto a third pipe may be joined — or may have end portions having different outside diameters for connecting pipes of different ID. The method of the invention appears to be most effective when the pipes (or connectors) employed are selected as follows.

The outside diameter of the second pipe when unstrained must have an OD greater than the ID of the first pipe bore when unstrained.

The first pipe for preference has a wall which near its bore mouth is elastically extensible in the circumferential direction at least to circumscribe the unstrained OD of the first pipe without surpassing its yield point.

The second pipe is elastically compressible in the circumferential direction, more preferably by an amount similar to said extensibility of the first pipe and desirably the pipes are of the same material and nominal radial dimensions. Desirably, the first pipe is of a material which recovers slowly from elastic extension.

The method may be used with particular advantage with pipes of plastics which absorb moisture and are therefore difficult or impossible to weld by conventional equipment. It is desirable that the pipes to be joined are clamped by means which enable forces in excess of 500 lbs. (2227 N), and more commonly in excess of 2000 lbs. (8908 N), to be applied between the pipes during the driving step but which will not seriously damage the pipe.

In a preferred embodiment the two pipes to be connected, or the pipe and the connector of Fig. 7 are made of plastics having differing elastic properties. For preference the pipe end which is to be the outer of the overlapping portion of the joint is made more extensible than the end of the inner pipe or connector as the case requires.

That may be achieved by including additional plasticizer in the pipe end of the outer pipe during manufacture or by using a connector of Fig. 7 of a more rigid material than the pipe or both.

Desirable relative extensibility and compressibility of the pipe ends, or of the pipe end and connector, vary with the plastics material from which those parts are made and with the dimensions thereof and may readily be determined by experiment.

The method has been successfully used with pipes from 20 to 100 mm in OD and is believed to be applicable to pipes of any dimension.

## Claims

1. A method of joining a pipe (6) and a tubular element (9) both of plastics material, where the outer diameter of the tubular element is greater than the inner diameter of the pipe, when the wall of each is unstrained, the method including flaring an end (7) of the pipe and driving an end portion (10) of the tubular element into and beyond the flared end so that the element is circumferentially gripped and clamped by the pipe, characterised in that the end (7) of the pipe (6) is flared at ambient temperature so that the wall is elastically deformed for a short period immediately prior to driving with considerable force the tubular element (9) into the flared end, the material of the pipe being chosen so that the flared end (7) elastically recovers to grip the tubular element (9) after the driving operation and so that the bore of the pipe end (7) is elastically expanded to an inner diameter greater than the outer diameter of the unstrained tubular element (9), and the material of the tubular element (9) being chosen so that when the element is elastically gripped by the pipe (6), the tensile strain in the wall of the pipe (6) is substantially equal to the compressive strain in the wall of the element (9).

2. A method according to Claim 1 characterised in that the pipe (6) is of greater extensibility in the circumferential direction than the element (9).

3. A method according to any one of Claims 1 or 2 characterised in that the tubular element (9) is another pipe of plastics material.

4. A method according to any one of the preceding claims characterised in that a force in excess of 1500 lbs. (6681 N) is applied in an axial direction between the pipe (6) and the element (9) during said step of driving.

5. A method according to any one of the preceding claims characterised in that said pipe (6) is for conducting a gas and the resulting joint is gas tight.

6. A method according to any one of the preceding claims characterised in that said pipe is buried over a part of its length.

7. A method according to any one of the preceding claims characterised in that the outer diameter of the element (9) is selected to be substantially the same as the outer diameter of the pipe (6).

8. A method according to any one of the preceding claims characterised in that said pipe (6) is a nylon extruded pipe.

9. A method according to any one of the preceding claims characterised in that said pipe (6) has a wall thickness in excess of 2 mm.

10. A method according to any one of the preceding claims characterised in that said pipe has an outer diameter at least 20 mm.

11. A method according to any one of the preceding claims characterised in that the tubular element is a part of a connector, and further comprising the steps of:

selecting a second pipe (9) being of a material which is elastically extensible in the circumferential direction and having an inner diameter less than the outer diameter of an end portion of said connector (40) remaining exposed after said initially driving operation;

flaring an end of the second pipe whereby to elastically extend the wall thereof in a circumferential direction;

driving said exposed end portion of said connector concentrically a distance into the flared end of the bore of the second pipe (9) whereby the second pipe end (7) and the first pipe end (10) each grip respective end portions of the connector.

12. A method according to any one of the preceding claims characterised in that said tubular element has one or more circumferential grooves (43) in the outer surface thereof, further comprising the step of coating the outer surface of said tubular element with an adhesive or solvent prior to said initial driving operation.

13. A method according to Claim 1 characterised in that said tubular element comprises:

a plastics tube having an end portion whereof the outer diameter is greater than 25 mm and is greater than the inner diameter of said pipe, said pipe comprising a plastics gas pipe to be joined therewith, said end portion having a chamfered tip whereof the chamfer increases in outer diameter in a direction away from the tip, the tube having a radially outwardly extending flange intermediate the chamfered tip and the other tube end, and having at least one groove extending in a circumferential direction intermediate said tip and said flange.

**Revendications**

1. Un procédé d'assemblage d'un tube (6) avec un élément tubulaire (9), tous les deux étant en matière plastique, le diamètre extérieur de l'élément tubulaire étant supérieur au diamètre intérieur du tube, et la paroi de chacun d'eux étant sans contrainte, le procédé comprenant l'évasement d'une extrémité (7) du tube et l'introduction d'une portion d'une extrémité (10) de l'élément tubulaire dans ladite extrémité évasée et au-delà de manière que l'élément soit pris et serré sur son pourtour par le tube, caractérisé en ce que l'extrémité (7) du tube (6) est évasée à la température ambiante de sorte que la paroi est déformée élastiquement pendant une courte période immédiatement avant l'introduction avec une force considérable de l'élément tubulaire (9) dans l'extrémité évasée, la matière du tube étant choisie de manière que l'extrémité évasée (7) recouvre élastiquement l'élément tubulaire (9) pour le serrer fixement après l'opération d'introduction et de manière que l'alésage de l'extrémité (7) du tube soit dilaté élastiquement à un diamètre intérieur supérieur au diamètre extérieur de l'élément tubulaire (9) sans contrainte, et la matière de l'élément tubulaire (9) étant choisie de manière que quand l'élément est saisi élastiquement par le tube (6), la déformation par traction de la paroi du tube (6) soit sensiblement égale à la déformation par compression de la paroi de l'élément (9).

2. Un procédé selon la revendication 1, caractérisé en ce que le tube (6) présente une plus grande extensibilité en direction périphérique que l'élément (9).

3. Un procédé selon l'une quelconque des revendications 1 et 2, caractérisé en ce que l'élément tubulaire (9) est un autre tube en matière plastique.

4. Un procédé selon l'une quelconque des revendications précédentes, caractérisé en ce qu'une force supérieure à 1500 livres (6681 N) est appliquée en direction axiale sur le tube (6) et l'élément (9) pendant ladite étape d'introduction.

5. Un procédé selon l'une quelconque des revendications précédentes, caractérisé en ce que ledit tube (6) est prévu pour conduire un gaz et l'assemblage résultant est étanche aux gaz.

6. Un procédé selon l'une quelconque des revendications précédentes, caractérisé en ce que ledit tube est enterré sur une partie de sa longueur.

7. Un procédé selon l'une quelconque des revendications précédentes, caractérisé en ce que le diamètre extérieur de l'élément (9) est choisi pour être sensiblement le même que le diamètre extérieur du tube (6).

8. Un procédé selon l'une quelconque des revendications précédentes, caractérisé en ce que ledit tube (6) est un tube en nylon extrudé.

9. Un procédé selon l'une quelconque des revendications précédentes, caractérisé en ce que ledit tube (6) a une épaisseur de paroi supérieure à 2 mm.

10. Un procédé selon l'une quelconque des revendications précédentes, caractérisé en ce que ledit tube a un diamètre extérieur au moins égal à 20 mm.

11. Un procédé selon l'une quelconque des revendications précédentes, caractérisé en ce que l'élément tubulaire fait partie d'un raccord, et en ce qu'il comporte en outre les étapes dans lesquelles:

— on choisit un second tube (9) en une matière qui est élastiquement extensible en direction périphérique, avec un diamètre intérieur inférieur au diamètre extérieur d'une partie d'extrémité dudit raccord (40) qui reste apparente après ladite opération d'introduction initiale;

— on évase une extrémité du second tube pour dilater ainsi élastiquement sa paroi en direction périphérique;

— on introduit ladite partie apparente dudit raccord sur une certaine distance, suivant le même axe, dans l'extrémité évasée de l'alésage du second tube (9), l'extrémité (7) du second tube et l'extrémite (10) du premier tube serrant alors fixement chacune des parties d'extrémité respectives du raccord.

12. Un procédé selon l'une quelconque des revendications précédentes, caractérisé en ce que ledit élément tubulaire comporte une ou plusieurs rainures périphériques (43) dans sa surface extérieure, le procédé comportant en outre l'étape de revêtement de la surface extérieure dudit élément tubulaire avec un adhésif ou un solvant avant ladite opération initiale d'introduction.

13. Un procédé selon la revendication 1, caractérisé en ce que ledit élément tubulaire comporte: un tube en matière plastique ayant une partie d'extrémité dont le diamètre extérieur est supérieur à 25 mm et est supérieur au diamètre intérieur dudit tube, ledit tube consistant en un tube à gaz en matière plastique devant être assemblé avec lui, ladite partie d'extrémité comportant un bout chanfreiné, le diamètre extérieur du chanfrein croissant en s'éloignant du bout, le tube comportant une collerette qui s'étend radialement vers l'extérieur entre le bout chanfreiné et l'autre extrémité du tube, et comportant au moins une rainure s'étendant en direction périphérique entre ledit bout et ladite collerette.

**Patentansprüche**

1. Verfahren zum Verbinden einer Röhre (6) und eines Rohrelements (9), die beide aus Kunststoff hergestellt sind, wobei der Außendurchmesser des Rohrelements größer ist als der Innendurchmesser der Röhre im ungedehnten Zustand der Wand(ung) jedes dieser Teile, wobei bei diesem Verfahren ein Ende (7) der Röhre (kelchförmig) aufgeweitet und ein Endabschnitt (10) des Rohrelements in das aufgeweitete Ende und über dieses hinaus eingetrieben wird, so daß das (Rohr-)Element durch die Röhre umfangsmäßig erfaßt und verspannt ist, dadurch gekennzeichnet, daß das Ende (7) der Röhre (6) bei Umgebungstemperatur (kelchförmig) aufgeweitet wird, so daß seine Wand(ung), unmittelbar bevor das Rohrelement (9) mit beträchtlicher Kraft in das aufgeweitete Ende eingetrieben wird, für eine kurze Zeitspanne elastisch verformt wird, der Werkstoff der Röhre so gewählt wird, daß sich das aufgeweitete Ende (7) unter Erfassung des Rohrelements (9) nach dem Eintreibvorgang elastisch zurückstellt oder -bildet und die Bohrung des Röhrenendes (7) elastisch auf einen Innendurchmesser, der größer ist als der Außendurchmesser des ungedehnten Rohrelements (9), aufgeweitet ist, und der Werkstoff des Rohrelements (9) so gewählt wird, daß dann, wenn das Rohrelement elastisch von der Röhre (6) erfaßt ist, die Dehnungsspannung in der Wand(ung) der Röhre (6) praktisch der Druckspannung in der Wand(ung) des Rohrelements (9) gleich ist.

2. Verfahren nach Anspruch 1, dadurch gekennzeichnet, daß die Röhre (6) in Umfangsrichtung eine größere Aufweitbarkeit (extensibility) als das Rohrelement (9) besitzt.

3. Verfahren nach einem der Ansprüche 1 oder 2, dadurch gekennzeichnet, daß das Rohrelement (9) eine andere Röhre aus Kunststoff ist.

4. Verfahren nach einem der vorangehenden Ansprüche, dadurch gekennzeichnet, daß während des Eintreibschritts eine Kraft von mehr als 6681 N (1500 lbs.) in Axialrichtung zwischen der Röhre (6) und dem Rohrelement (9) ausgeübt wird.

5. Verfahren nach einem der vorangehenden Ansprüche, dadurch gekennzeichnet, daß die Röhre (6) zur Führung eines Gases dient und die erzeugte Verbindung gasdicht ist.

6. Verfahren nach einem der vorangehenden Ansprüche, dadurch gekennzeichnet, daß die Röhre über einen Teil ihrer Länge (in das Erdreich) eingegraben wird.

7. Verfahren nach einem der vorangehenden Ansprüche, dadurch gekennzeichnet, daß der Außendurchmesser des Rohrelements (9) praktisch gleich dem Außendurchmesser der Röhre (6) gewählt wird.

8. Verfahren nach einem der vorangehenden Ansprüche, dadurch gekennzeichnet, daß die Röhre (6) eine aus Nylon stranggepreßte oder extrudierte Röhre ist.

9. Verfahren nach einem der vorangehenden Ansprüche, dadurch gekennzeichnet, daß die Röhre (6) eine Wanddicke von mehr als 2 mm aufweist.

10. Verfahren nach einem der vorangehenden Ansprüche, dadurch gekennzeichnet, daß die Röhre einen Außendurchmesser von mindestens 20 mm aufweist.

11. Verfahren nach einem der vorangehenden Ansprüche, dadurch gekennzeichnet, daß das Rohrelement Teil eines Verbinders ist und daß weiterhin eine zweite Röhre (9) aus einem Werkstoff, der in Umfangsrichtung elastisch aufweitbar ist, und mit einem Innendurchmesser, der kleiner ist als der Außendurchmesser eines nach dem anfänglichen Eintreibvorgang nach außen hin freiliegenden Endabschnitt des Verbinders (40), gewählt wird, ein Ende der zweiten Röhre (kelchförmig) aufgeweitet und damit ihre Wand(ung) in Umfangsrichtung elastisch gedehnt wird, (und) der freiliegende Endabschnitt des Verbinders konzentrisch über eine (bestimmte) Strecke in das aufgeweitete Ende der zweiten Röhre (9) eingetrieben wird, so daß das zweite Röhrenende (7) und das erste Röhrenende (10) jeweils die betreffenden Endabschnitte des Verbinders erfassen bzw. verspannen.

12. Verfahren nach einem der vorangehenden Ansprüche, dadurch gekennzeichnet, daß das Rohrelement in seiner Außenfläche einer oder mehrere (umfangsmäßig) umlaufende Nuten (43) aufweist und daß weiterhin vor dem anfänglichen Eintreibvorgang die Außenfläche des Rohrelements mit einem Kleb- oder Lösungsmittel bestrichen wird.

13. Verfahren nach Anspruch 1, dadurch gekennzeichnet, daß das Rohrelement einen Kunststoff-Rohrteil mit einem endabschnitt aufweist, dessen Außendurchmesser größer als 25 mm und (auch) größer als der Innendurchmesser der Röhre ist, die Röhre eine damit zu verbindende Kunststoff-Gasröhre umfaßt, der Endabschnitt ein angefastes Vorder- oder Spitzenende aufweist, dessen Anfasung sich im Außendurchmesser vom Spitzenende hinweg vergrößert, (und) das Rohr(element) einen radial nach außen erweiterten Flansch zwischen dem angefasten Spitzenende und dem anderen Röhrenende aufweist und zwischen dem Spitzenende und dem Flansch mit mindestens einer umfangsmäßig verlaufenden Nut versehen ist.

*Fig.1*

*Fig.2*

0 045 757

Fig. 3

Fig. 4

Fig. 5

Fig. 6

2

_Fig. 7_

_Fig. 8_

_Fig. 9_

3